# EUROPÄISCHE PATENTSCHRIFT

(11) **EP 2 620 958 B1**
(45) Veröffentlichungstag und Bekanntmachung des Hinweises auf die Patenterteilung: **26.11.2014**
(21) Anmeldenummer: 12152584.4
(22) Anmeldetag: 26.01.2012
(51) Int. Cl.: H01F 27/04, H01F 27/32, H01F 27/36

(54) **Abschirmvorrichtung für ein elektrisch leitfähiges Verbindungselement**
Shielding device for an electrically conductive connection element
Dispositif de blindage pour un élément de liaison à conduction électrique

(43) Veröffentlichungstag der Anmeldung: 31.07.2013
(73) Patentinhaber: Siemens Aktiengesellschaft, 80333 München (DE)
(72) Erfinder: Wimmer, Rene Martin, 92353 Postbauer-Heng (DE); Hoppe, Jens, 90592 Schwarzenbruck (DE); Wende, Thomas, 90461 Nürnberg (DE)

(56) Entgegenhaltungen:
- WO-A1-2010/060450
- CH-A5- 695 968
- DE-A1-102005 021 255
- JP-A- 58 222 510

## Beschreibung

Die Erfindung betrifft eine Abschirmvorrichtung für ein elektrisch leitfähiges Verbindungselement sowie deren Verwendung für einen Transformator oder eine Drosselspule.

Elektrisch leitende Verbindungen zu Transformatoren oder Drosselspulen müssen insbesondere im Hochspannungsbereich gegen die Umgebung elektrostatisch abgeschirmt werden, um insbesondere Spannungsüberschläge zu verhindern. Es wird auf die japanische Patentanmeldung JP 58 222510 A verwiesen, die die Merkmale des Oberbegriffs von Anspruch 1 zeigt.

Der Erfindung liegt die Aufgabe zugrunde, eine verbesserte Abschirmvorrichtung für ein elektrisch leitfähiges Verbindungselement anzugeben, die insbesondere für die Verwendung im Wechselhochspannungsbereich geeignet ist.

Die Aufgabe wird erfindungsgemäß durch eine Abschirmvorrichtung mit den Merkmalen des Anspruchs 1 und deren Verwendung gemäß den Merkmalen des Anspruchs 12 gelöst.

Vorteilhafte Ausgestaltungen der Erfindung sind Gegenstand der Unteransprüche.

Eine erfindungsgemäße Abschirmvorrichtung für ein elektrisch leitfähiges Verbindungselement umfasst eine rohrförmige, an beiden Enden offene Elektrode, durch die das Verbindungselement führbar ist und deren Außenseite elektrisch isoliert ist, sowie mehrere ineinander geschachtelte rohrförmige Barriereelemente, die konzentrisch um die Elektrode herum angeordnet sind. Dabei sind um jeden Endabschnitt der Elektrode herum konzentrisch wenigstens zwei ineinander geschachtelte Ringelemente angeordnet, die über den jeweiligen Endabschnitt der Elektrode hinausragen und deren über den Endabschnitt hinausragende Bereiche jeweils um 90 Grad nach innen gebogen sind. Ferner sind alle Ringelemente jedes Endabschnitts der Elektrode an jeweils einem ringförmigen und konzentrisch zu diesen Ringelementen angeordneten Haltering befestigt.

Durch die rohrförmige Gestaltung der Elektrode und der Barriereelemente kann ein Raumbereich, durch den das Verbindungselement geführt wird, wirkungsvoll abgeschirmt werden. Die beidseitig offene Ausbildung der Elektrode ermöglicht es vorteilhaft, den Raumbereich bereits vor einer Einführung des Verbindungselementes in den Raumbereich abzuschirmen, so dass die Abschirmung während des gesamten Einführungsprozesses besteht. Die Anordnung mehrerer rohrförmiger Barriereelemente um die Elektrode herum ermöglicht eine effektive Isolierung des Raumbereiches auch für Anwendungen im Wechselhochspannungsbereich. Die Anordnung wenigstens zweier ineinander geschachtelter Ringelemente um jeden Endabschnitt der Elektrode ermöglicht vorteilhaft eine gezielte Isolierung von hohen elektrostatischen Feldstärken, die an den Endabschnitten der Elektrode auftreten können.

Dadurch, dass die Ringelemente jeweils um 90 Grad nach innen gebogene und über den jeweiligen Endabschnitt der Elektrode hinausragende Bereiche aufweisen, isolieren sie die Elektrodenenden sowohl nach außen als auch zu den Öffnungen der Elektrode hin und verstärken somit vorteilhaft die Isolationswirkung in den Endbereichen der Elektrode. Die Befestigung der Ringelemente an ringförmigen Halteringen ermöglicht vorteilhaft eine weitere Isolierung durch die Halteringe.

Die Ausführung der Abschirmvorrichtung mit einer Elektrode und jeweils mehreren Barriere- und Ringelementen ermöglicht außerdem vorteilhaft einen flexiblen Aufbau der Abschirmvorrichtung nach dem Baukastenprinzip mit verschiedenen Standardbauteilen, so dass dieser Aufbau den jeweiligen geometrischen und elektrostatischen Anforderungen angepasst werden kann.

Eine bevorzugte Ausgestaltung der Erfindung sieht vor, dass wenigstens ein Randbereich eines Endabschnitts der Elektrode nach innen umgebogen ist.

Durch das Umbiegen eines Randbereiches der Elektrode werden vorteilhaft die dort auftretenden elektrostatischen Feldstärken reduziert und somit die Abschirmwirkung der Elektrode verbessert.

Dabei ist vorzugsweise jeder nach innen umgebogene Randbereich der Elektrode elektrisch isoliert.

Die elektrische Isolierung eines umgebogenen Randbereichs verbessert weiter die Abschirmwirkung der Elektrode in diesem Bereich.

Die Elektrode ist vorzugsweise aus Kupfer oder Aluminium gefertigt.

Kupfer und Aluminium eignen sich vor allem wegen ihrer hohen elektrischen Leitfähigkeit als Elektrodenmaterial.

Die elektrisch isolierten Bereiche der Elektrode sind vorzugsweise mittels Papierisolation, insbesondere Ölpapierisolation, oder gegautschten Materials elektrisch isoliert.

Diese Materialien eignen sich vorteilhaft zur elektrischen Isolierung von Elektrodenbereichen, da sie dünn, leicht und kostengünstig sind.

In einer Ausgestaltung der Erfindung ist wenigstens eines der um die Elektrode herum angeordneten rohrförmigen Barriereelemente aus zwei rohrförmigen Teilstücken zusammengesetzt, die in einem ringartigen Überlappungsbereich aneinander gefügt sind.

Eine derartige zweiteilige Ausführung von Barriereelementen hat den Vorteil, dass die Ausdehnung der Barriereelemente nach dem Baukastenprinzip verschiedenen geometrischen Anforderungen an die Abschirmvorrichtung angepasst werden kann. Beispielsweise können erste Teilstücke verwendet werden, die im Wesentlichen nur den Raumbereich um die Elektrode herum isolieren, und zweite Teilstücke, deren Ausdehnung dem zur Verfügung stehenden sonstigen Raum angepasst werden können.

In einer weiteren Ausgestaltung der Erfindung nehmen die Längsausdehnungen der konzentrisch um die Elektrode herum angeordneten rohrförmigen Barriereelemente von innen nach außen zu, wobei jedes dieser Barriereelemente alle weiter innen liegenden rohrförmigen Barriereelemente konzentrisch vollständig umgibt.

Dadurch lässt sich ein Barrieresystem mit einer sich konisch zu der Elektrode verengenden Öffnung konstruieren. Dies ist insbesondere vorteilhaft, wenn sich der Raum zur Zuführung des Verbindungselementes zu der Elektrode hin verengen soll.

Vorzugsweise weist die Abschirmvorrichtung ferner wenigstens ein hohles erstes kegelstumpfförmiges Barriereelement auf, das dachartig über einem Endabschnitt der Elektrode angeordnet ist und sich von der Elektrode weg verengt.

Dadurch wird wenigstens ein Endabschnitt der Elektrode vorteilhaft zusätzlich isoliert.

In einer weiteren Ausgestaltung der Erfindung weist die Abschirmvorrichtung ein hohles zweites kegelstumpfförmiges Barriereelement auf, das trichterartig über einem Endabschnitt der Elektrode angeordnet ist und sich von der Elektrode weg weitet.

Diese Ausgestaltung eignet sich ebenfalls vorteilhaft zur Abschirmung des Raumes zur Zuführung des Verbindungselementes, wenn sich dieser Raum zu der Elektrode hin verengen soll. Vorzugsweise ist an wenigstens einem der Halteringe wenigstens ein Barriereelement und/oder die Elektrode befestigt.

Dadurch wird wenigstens ein Haltering auch zur Befestigung der Elektrode oder wenigstens eines Barriereelementes verwendet, wodurch vorteilhaft die Komponentenanzahl der Abschirmvorrichtung verringert wird.

Die Barriereelemente und/oder die Ringelemente und/oder die Halteringe sind vorzugsweise aus Pressspan gefertigt.

Pressspan eignet sich als Material für die Barriere- und Ringelemente und die Halteringe aufgrund seiner guten dielektrischen Eigenschaften, geringen Kosten und einfachen Verarbeitung.

Eine erfindungsgemäße Abschirmvorrichtung wird vorzugsweise für einen Transformator oder eine Drosselspule zur Abschirmung eines elektrisch leitfähigen Verbindungselementes verwendet, wobei das Verbindungselement zwischen einer Durchführung zur Kontaktierung des Transformators oder der Drosselspule und einer Leitungsführung des Transformators oder der Drosselspule verläuft.

Einer derartigen Verwendung ist eine erfindungsgemäße Abschirmvorrichtung geometrisch besonders gut angepasst, da die Abschirmvorrichtung zwei offene Enden hat, von denen eines um ein Ende der Durchführung herum und das andere um ein Ende der Leitungsführung herum angeordnet werden kann.

Vorzugsweise wird die Abschirmvorrichtung bei einer derartigen Verwendung in einem Dom angeordnet, der an einem Gehäuse des Transformators oder der Drosselspule angeordnet wird und der die Durchführung aufweist und in den die Leitungsführung hineingeführt wird.

Unter einem Dom wird dabei eine geerdete Baueinheit verstanden, die an einem Gehäuse eines Transformators oder einer Drosselspule befestigt wird und vorzugsweise als Halterung für die Durchführung dient.

Durch die Anordnung der Abschirmvorrichtung in einem Dom kann sie leicht montiert, gewartet und erforderlichenfalls ausgetauscht werden, ohne das Gehäuse des Transformators oder der Drosselspule öffnen zu müssen.

Vorzugsweise umgibt ferner wenigstens ein Barriereelement wenigstens einen Teil der Durchführung.

Dadurch wird die Durchführung vorteilhaft durch wenigstens eines der Barriereelemente isoliert.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung von Ausführungsbeispielen, die im Zusammenhang mit Zeichnungen näher erläutert werden.

Dabei zeigen:
Figur 1 eine Schnittdarstellung eines Ausschnitts eines Doms, der an einem Gehäuse eines Transformators angeordnet ist und in dem eine Abschirmvorrichtung für eine Verbindung einer Durchführung mit einer Leitungsführung des Transformators angeordnet ist,
Figur 2 einen vergrößerten Ausschnitt der Figur 1, und
Figur 3 eine Abwandlung des in Figur 1 dargestellten Ausführungsbeispiels.

Einander entsprechende Teile sind in den Figuren mit den gleichen Bezugszeichen versehen.

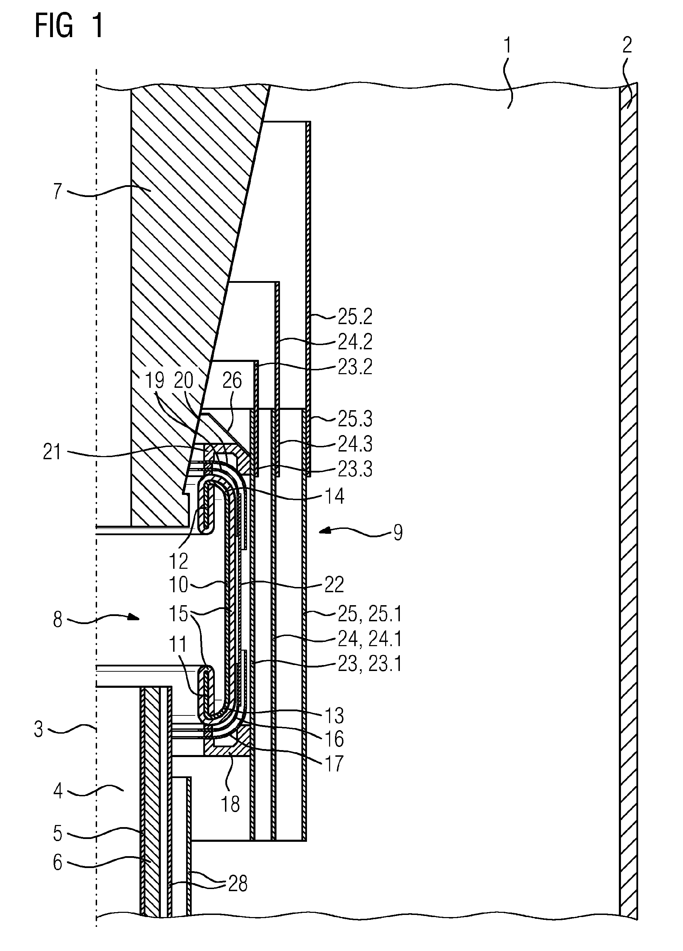

Figur 1 zeigt eine Schnittdarstellung eines Ausschnitts eines Doms 1, der an einem Gehäuse eines nicht dargestellten Transformators angeordnet ist. Beispielsweise ist das Gehäuse des Transformators quaderförmig ausgebildet und der Dom 1 ist an einer Oberseite des Gehäuses angeordnet.

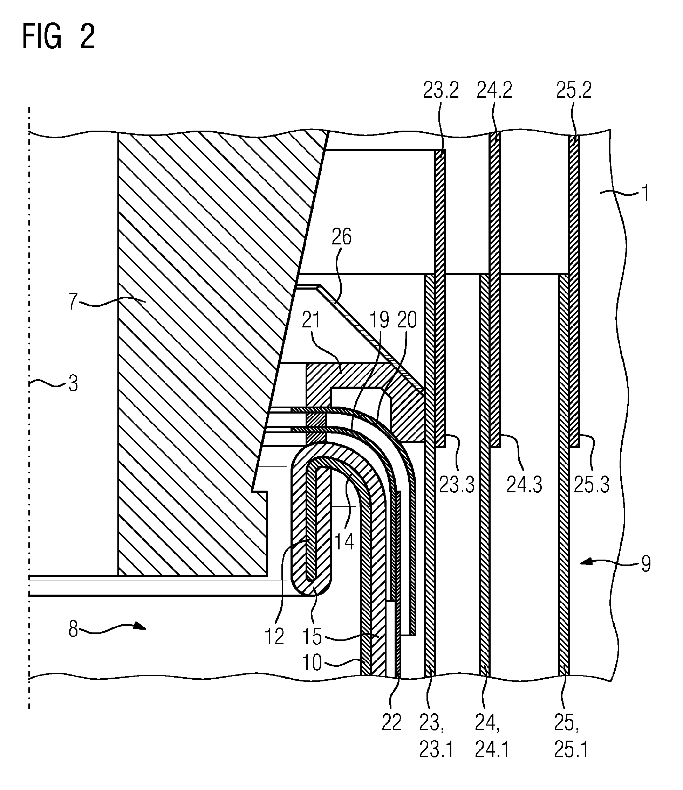

Figur 2 zeigt einen vergrößerten Ausschnitt der Figur 1.

Der Dom 1 weist eine kreiszylindrische Außenwand 2 auf, die elektrisch geerdet ist. Er ist rotationssymmetrisch um eine Symmetrieachse 3 ausgebildet, die die Zylinderachse der Außenwand 2 und eine Hochachse des Doms 1 bildet. Dargestellt ist nur eine Hälfte eines Längsschnittes durch den Dom 1 zwischen der Außenwand 2 und der Symmetrieachse 3.

In den Dom 1 ist eine Leitungsführung 4 des Transformators geführt, die in diesem Ausführungsbeispiel als ein kreiszylindrisches Kupferrohr ausgebildet ist, das um die Symmetrieachse 3 herum von unten in den Dom 1 hineinragt. Die Rohrwand 5 der Leitungsführung 4 ist außen mit einer Leitungsführungsisolierung 6 versehen und von zylindrischen Leitungsführungsbarrieren 28 umgeben. Die Leitungsführungsisolierung 6 ist als Papierisolation ausgeführt. Die Leitungsführung 4 dient zur Führung eines (nicht dargestellten) Stromkabels, das mit Wicklungen des Transformators elektrisch verbunden ist.

Zur elektrischen Kontaktierung des Transformators von außen weist der Dom 1 eine Durchführung 7 mit einem in den Figuren dargestellten Ölteil auf, der sich von einer Deckelseite des Doms 1 nach unten erstreckt. Der Ölteil ist ringartig und ebenfalls rotationssymmetrisch um die Symmetrieachse 3 herum ausgebildet und verengt sich nach unten. In ihm sind zur kapazitiven Absteuerung geeignete Folien angeordnet, die um die Symmetrieachse 3 herum gewickelt sind.

Die Durchführung 7 und die Leitungsführung 4 sind durch einen Zwischenraum 8 voneinander getrennt, der der Verbindung der Durchführung 7 und der Leitungsführung 4 mittels eines nicht dargestellten elektrisch leitfähigen Verbindungselementes dient. Das Verbindungselement kann beispielsweise aus flexiblen Kupferbändern oder einer Multikontaktsteckverbindung bestehen.

Zur Abschirmung des Verbindungselementes ist in dem Dom 1 um den Zwischenraum 8 herum eine erfindungsgemäße Abschirmvorrichtung 9 angeordnet, die ebenfalls rotationssymmetrisch um die Symmetrieachse 3 herum ausgebildet ist.

Die Abschirmvorrichtung 9 weist eine rohrförmige Elektrode 10 auf, die im Wesentlichen als ein an beiden Enden offener Kreishohlzylinder ausgebildet ist, wobei allerdings ein unterer Randbereich 11 eines unteren Endabschnitts 13 der Elektrode 10 und ein oberer Randbereich 12 eines oberen Endabschnitts 14 der Elektrode 10 jeweils um 180 Grad nach innen, d.h. zu dem Zwischenraum 8 hin, umgebogen sind. Dabei befindet sich der untere umgebogene Randbereich 11 auf der Höhe eines oberen Endes der Leitungsführung 4 und der obere umgebogene Randbereich 12 auf der Höhe des unteren Endes der Durchführung 7. Die Elektrode 10 ist aus Kupfer gefertigt.

Die beiden nach innen umgebogenen Randbereiche 11, 12 sind beidseitig mit einer Papierisolation 15 elektrisch isoliert. Die Außenseite der Elektrode 10 ist ebenfalls mit Papierisolation 15 elektrisch isoliert. Dabei wird unter der Außenseite der Elektrode 10 die dem Zwischenraum 8 abgewandte Seite verstanden.

Der untere Endabschnitt 13 der Elektrode 10 ist nach außen hin von zwei ineinander geschachtelten unteren Ringelementen 16, 17 umgeben, die konzentrisch und rotationssymmetrisch um die Symmetrieachse 3 verlaufen und nach unten über den unteren Endabschnitt 13 hinausragen. Dabei sind die über den unteren Endabschnitt 13 hinausragenden Bereiche der unteren Ringelemente 16, 17 jeweils um 90 Grad nach innen gebogen, so dass sie den unteren Endabschnitt 13 der Elektrode 10 von unten isolieren. Ferner sind die unteren Ringelemente 16, 17 voneinander und von der Elektrode 10 räumlich beabstandet, so dass ein erstes unteres Ringelement 16 zwischen dem unteren Endabschnitt 13 der Elektrode 10 und dem zweiten unteren Ringelement 17 und von beiden beabstandet angeordnet ist.

Die unteren Ringelemente 16, 17 und der untere Endabschnitt 13 der Elektrode 10 sind an einem unteren Haltering 18 befestigt, der konzentrisch um einen oberen Bereich der Leitungsführung 4 herum angeordnet ist.

In analoger Weise ist der obere Endabschnitt 14 der Elektrode 10 nach außen hin von zwei ineinander geschachtelten oberen Ringelementen 19, 20 umgeben, die konzentrisch und rotationssymmetrisch um die Symmetrieachse 3 verlaufen und nach oben über den oberen Endabschnitt 14 hinausragen. Dabei sind die über den oberen Endabschnitt 14 hinausragenden Bereiche der oberen Ringelemente 19, 20 jeweils um 90 Grad nach innen gebogen, so dass sie den oberen Endabschnitt 14 der Elektrode 10 von oben isolieren. Ferner sind die oberen Ringelemente 19, 20 voneinander und von der Elektrode 10 räumlich beabstandet, so dass ein erstes oberes Ringelement 19 zwischen dem oberen Endabschnitt 14 der Elektrode 10 und dem zweiten oberen Ringelement 20 und von beiden beabstandet angeordnet ist.

Die oberen Ringelemente 19, 20 und der obere Endabschnitt 14 der Elektrode 10 sind an einem oberen Haltering 21 befestigt, der konzentrisch um einen unteren Bereich der Durchführung 7 herum angeordnet ist.

Um die Elektrode 10 herum sind vier ineinander geschachtelte rohrförmige Barriereelemente 22 bis 25 konzentrisch und rotationssymmetrisch zur Symmetrieachse 3 angeordnet, die die Ölstrecken unterteilen. Über der Elektrode 10 ist ein hohles erstes kegelstumpfförmiges Barriereelement 26 angeordnet.

Dabei ist ein innerstes, erstes rohrförmiges Barriereelement 22 derart angeordnet, dass sein unterer Bereich zwischen den oberen Bereichen der beiden unteren Ringelemente 16, 17 verläuft und dort an dem ersten unteren Ringelement 16 anliegt und befestigt ist und sein oberer Bereich zwischen den unteren Bereichen der beiden oberen Ringelemente 19, 20 verläuft und dort an dem ersten oberen Ringelement 19 anliegt und befestigt ist.

Das erste kegelstumpfförmige Barriereelement 26 verläuft dachartig und rotationssymmetrisch zur Symmetrieachse 3 oberhalb des oberen Halterings 21, der oberen Ringelemente 19, 20 und der Elektrode 10 um einen unteren Bereich der Durchführung 7 herum, wobei es sich nach oben hin verengt und in seinem unteren Bereich an dem oberen Haltering 21 befestigt ist.

Die weiteren rohrförmigen Barriereelemente 23 bis 25 sind jeweils zweiteilig ausgeführt und um die Elektrode 10, die Ringelemente 16, 17, 19, 20, das erste rohrförmige Barriereelement 22, die Halteringe 18, 21 und das erste kegelstumpfförmige Barriereelement 26 herum angeordnet. Sie bestehen jeweils aus zwei rohrförmigen Teilstücken 23.1 und 23.2, 24.1 und 24.2 bzw. 25.1 und 25.2. Dabei sind erste Teilstücke 23.1, 24.1, 25.1 aller drei rohrförmigen Barriereelemente 23 bis 25 gleich lang ausgebildet und in gleicher Höhe angeordnet, ihr Umfang nimmt jedoch von innen nach außen zu.

Die ersten Teilstücke 23.1, 24.1, 25.1 bilden die unteren Abschnitte der rohrförmigen Barriereelemente 23 bis 25. Das zweite Teilstück 23.2, 24.2, 25.2 jedes der rohrförmigen Barriereelemente 23 bis 25 ist in einem ringartigen Überlappungsbereich 23.3, 24.3, 25.3 an ein oberes Ende des jeweiligen ersten Teilstückes 23.1, 24.1, 25.1 gefügt und bildet den oberen Abschnitt des jeweiligen rohrförmigen Barriereelementes 23 bis 25. Dabei nimmt die Länge der zweiten Teilstücke 23.2, 24.2, 25.2 von innen nach außen zu, so dass auch die Höhe der rohrförmigen Barriereelemente 22 bis 25 von innen nach außen, d.h. von dem innersten, ersten 22 zu dem äußersten, vierten 25 der Barriereelemente 22 bis 25 zunimmt und jedes der rohrförmigen Barriereelemente 23 bis 25 alle weiter innen liegenden rohrförmigen Barriereelemente 22 bis 25 konzentrisch vollständig umgibt. Ferner nimmt der Abstand benachbarter rohrförmiger Barriereelemente 22 bis 25 von innen nach außen zu.

Das zweite rohrförmige Barriereelement 23 ist an seiner Innenseite an beiden Halteringen 18, 21 befestigt. Das dritte 24 und das vierte 25 der rohrförmigen Barriereelemente 22 bis 25 sind beispielsweise mittels nicht dargestellter Verbindungselemente an einem benachbarten rohrförmigen Barriereelement 23 bis 25 befestigt. Die gesamte Abschirmvorrichtung 9 ist auf nicht dargestellte Weise an der Leitungsführung 4 und/oder am Dom 1 befestigt, beispielsweise mittels einer nichtmetallischen Schraubverbindung auf die Leitungsführung 4 aufgeschraubt und/oder mittels einer Halterung an dem Dom 1 befestigt.

Die Ringelemente 16, 17, 19, 20 und die Barriereelemente 22 bis 26 sind aus Pressspan gefertigt.

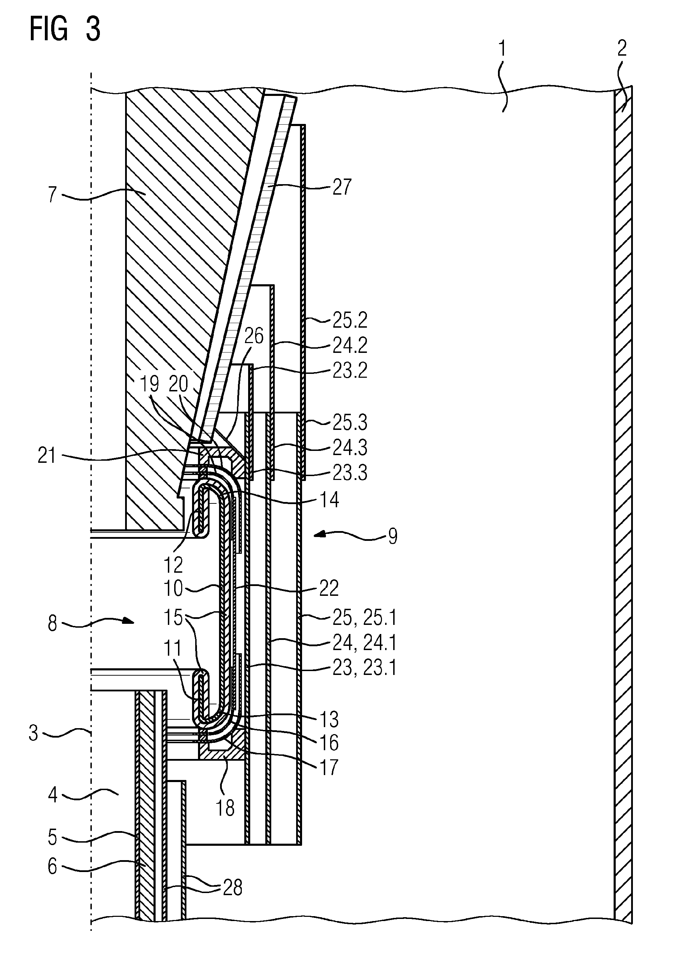

Figur 3 zeigt eine Ausgestaltung des in Figur 1 dargestellten Ausführungsbeispiels. Diese Ausgestaltung sieht zusätzlich ein hohles zweites kegelstumpfförmiges Barriereelement 27 vor, das trichterartig und rotationssymmetrisch zur Symmetrieachse 3 oberhalb des oberen Halterings 21, der oberen Ringelemente 19, 20 und der Elektrode 10 um einen oberen Bereich der Durchführung 7 herum verläuft, wobei es sich nach oben hin weitet. Auch das zweite kegelstumpfförmige Barriereelement 27 ist aus Pressspan gefertigt. Abgesehen von dem zweiten kegelstumpfförmigen Barriereelement 27 gleicht das in Figur 3 dargestellte Ausführungsbeispiel dem in den Figuren 1 und 2 dargestellten Ausführungsbeispiel.

Obwohl die Erfindung im Detail durch ein bevorzugtes Ausführungsbeispiel näher illustriert und beschrieben wurde, so ist sie nicht durch dieses offenbarte Beispiel eingeschränkt und andere Variationen können vom Fachmann hieraus abgeleitet werden, ohne den Schutzumfang der Erfindung zu verlassen.

## Patentansprüche

1. Abschirmvorrichtung (9) für ein elektrisch leitfähiges Verbindungselement, umfassend eine rohrförmige, an beiden Enden offene Elektrode (10), durch die das Verbindungselement führbar ist und deren Außenseite elektrisch isoliert ist, und mehrere ineinander geschachtelte rohrförmige Barriereelemente (22 bis 25), die konzentrisch um die Elektrode (10) herum angeordnet sind, wobei um jeden Endabschnitt (13, 14) der Elektrode (10) herum konzentrisch wenigstens zwei gleichartige ineinander geschachtelte Ringelemente (16, 17, 19, 20) angeordnet sind, die über den jeweiligen Endabschnitt (13, 14) der Elektrode (10) hinausragen und deren über den Endabschnitt (13, 14) hinausragende Bereiche jeweils um 90 Grad nach innen gebogen sind, **dadurch gekennzeichnet, dass** alle Ringelemente (16, 17, 19, 20) jedes Endabschnitts (13, 14) der Elektrode (10) an jeweils einem ringförmigen und konzentrisch zu diesen Ringelementen (16, 17, 19, 20) angeordneten Haltering (18, 21) befestigt sind.

2. Abschirmvorrichtung (9) nach Anspruch 1,
**dadurch gekennzeichnet, dass** wenigstens ein Randbereich (11, 12) eines Endabschnitts (13, 14) der Elektrode (10) nach innen umgebogen ist.

3. Abschirmvorrichtung (9) nach Anspruch 2,
**dadurch gekennzeichnet, dass** jeder nach innen umgebogene Randbereich (11, 12) der Elektrode (10) elektrisch isoliert ist.

4. Abschirmvorrichtung (9) nach einem der vorhergehenden Ansprüche,
**dadurch gekennzeichnet, dass** die Elektrode (10) aus Kupfer oder Aluminium gefertigt sind.

5. Abschirmvorrichtung (9) nach einem der vorhergehenden Ansprüche,
**dadurch gekennzeichnet, dass** die elektrisch isolierten Bereiche der Elektrode (10) mittels Papierisolation (15) oder gegautschten Materials elektrisch isoliert sind.

6. Abschirmvorrichtung (9) nach einem der vorhergehenden Ansprüche,
**dadurch gekennzeichnet, dass** wenigstens eines der um die Elektrode (10) herum angeordneten rohrförmigen Barriereelemente (22 bis 25) aus zwei rohrförmigen Teilstücken (23.1, 23.2, 24.1, 24.2, 25.1, 25.2) zusammengesetzt ist, die in einem ringartigen Überlappungsbereich (23.3, 24.3, 25.3) aneinander gefügt sind.

7. Abschirmvorrichtung (9) nach einem der vorhergehenden Ansprüche,
**dadurch gekennzeichnet, dass** die Längsausdehnungen der konzentrisch um die Elektrode (10) herum angeordneten rohrförmigen Barriereelemente (22 bis 25) von innen nach außen zunehmen, wobei jedes dieser Barriereelemente (22 bis 25) alle weiter innen liegenden rohrförmigen Barriereelemente (22 bis 25) konzentrisch vollständig umgibt.

8. Abschirmvorrichtung (9) nach einem der vorhergehenden Ansprüche,
**gekennzeichnet durch** wenigstens ein hohles erstes kegelstumpfförmiges Barriereelement (26), das dachartig über einem Endabschnitt (13, 14) der Elektrode (10) angeordnet ist und sich von der Elektrode (10) weg verengt.

9. Abschirmvorrichtung (9) nach einem der vorhergehenden Ansprüche,
**gekennzeichnet durch** ein hohles zweites kegelstumpfförmiges Barriereelement (27), das trichterartig über einem Endabschnitt (13, 14) der Elektrode (10) angeordnet ist und sich von der Elektrode (10) weg weitet.

10. Abschirmvorrichtung (9) nach einem der vorhergehenden Ansprüche,
**dadurch gekennzeichnet, dass** an wenigstens einem Haltering (18, 21) wenigstens ein Barriereelement (22 bis 27) und/oder die Elektrode (10) befestigt ist.

11. Abschirmvorrichtung (9) nach einem der vorhergehenden Ansprüche,
**dadurch gekennzeichnet, dass** die Barriereelemente (22 bis 27) und/oder die Ringelemente (16, 17, 19, 20) und/oder die Halteringe (18, 21) aus Pressspan gefertigt sind.

12. Verwendung einer Abschirmvorrichtung (9) nach einem der vorhergehenden Ansprüche für einen Transformator oder eine Drosselspule zur Abschirmung eines elektrisch leitfähigen Verbindungselementes, das zwischen einer Durchführung (7) zur Kontaktierung des Transformators oder der Drosselspule und einer Leitungsführung (4) des Transformators oder der Drosselspule verläuft.

13. Verwendung nach Anspruch 12,
**dadurch gekennzeichnet, dass** die Abschirmvorrichtung (9) in einem Dom (1) angeordnet wird, der an einem Gehäuse des Transformators oder der Drosselspule angeordnet wird und die Durchführung (7) aufweist und in den die Leitungsführung (4) hineingeführt wird.

14. Verwendung nach Anspruch 12 oder 13,
**dadurch gekennzeichnet, dass** wenigstens ein Barriereelement (22 bis 27) wenigstens einen Teil der Durchführung (7) umgibt.

## Claims

1. Shielding device (9) for an electrically conductive connecting element, comprising a tubular electrode (10) which is open at both ends and through which the connecting element can be routed and of which the outer face is electrically insulated, and comprising a plurality of tubular barrier elements (22 to 25) which are interleaved one in the other and are arranged in a concentric manner around the electrode (10), wherein at least two identical ring elements (16, 17, 19, 20) which are interleaved one in the other are arranged around each end section (13, 14) of the electrode (10) in a concentric manner, said ring elements projecting beyond the respective end section (13, 14) of the electrode (10) and those regions of said ring elements which project beyond the end section (13, 14) being bent inward through 90 degrees in each case, **characterized in that** all ring elements (16, 17, 19, 20) of each end section (13, 14) of the electrode (10) are fastened to in each case one annular retaining ring (18, 21) which is arranged in a concentric manner in relation to said ring elements (16, 17, 19, 20).

2. Shielding device (9) according to Claim 1,
**characterized in that** at least one edge region (11, 12) of an end section (13, 14) of the electrode (10) is bent inward.

3. Shielding device (9) according to Claim 2,
**characterized in that** each inwardly bent edge region (11, 12) of the electrode (10) is electrically insulated.

4. Shielding device (9) according to one of the preceding claims,
**characterized in that** the electrode (10) is produced from copper or aluminum.

5. Shielding device (9) according to one of the preceding claims, **characterized in that** the electrically insulated regions of the electrode (10) are electrically insulated by means of paper insulation (15) or vat-lined material.

6. Shielding device (9) according to one of the preceding claims,
**characterized in that** at least one of the tubular barrier elements (22 to 25) which are arranged around the electrode (10) is composed of two tubular segments (23.1, 23.2, 24.1, 24.2, 25.1, 25.2) which are joined to one another in a ring-like overlap region (23.3, 24.3, 25.3).

7. Shielding device (9) according to one of the preceding claims,
**characterized in that** the longitudinal extents of the tubular barrier elements (22 to 25) which are arranged around the electrode (10) in a concentric manner increase from the inside to the outside, wherein each of these barrier elements (22 to 25) completely surrounds in a concentric manner all tubular barrier elements (22 to 25) which are situated further inward.

8. Shielding device (9) according to one of the preceding claims,
**characterized by** at least one hollow first barrier element (26) which is in the form of a truncated cone, is arranged in the manner of a roof above an end section (13, 14) of the electrode (10) and becomes narrower as it moves away from the electrode (10).

9. Shielding device (9) according to one of the preceding claims,
**characterized by** a hollow second barrier element (27) which is in the form of a truncated cone, is arranged in the manner of a funnel above an end section (13, 14) of the electrode (10) and widens as it moves away from the electrode (10).

10. Shielding device (9) according to one of the preceding claims,
**characterized in that** at least one barrier element (22 to 27) and/or the electrode (10) is fastened to at least one retaining ring (18, 21).

11. Shielding device (9) according to one of the preceding claims,
**characterized in that** the barrier elements (22 to 27) and/or the ring elements (16, 17, 19, 20) and/or the retaining rings (18, 21) are produced from pressboard.

12. Use of a shielding device (9) according to one of the preceding claims for a transformer or a choke coil for shielding an electrically conductive connecting element which runs between a bushing (7) for making contact with the transformer or the choke coil and a line guide (4) of the transformer or of the choke coil.

13. Use according to Claim 12,
**characterized in that** the shielding device (9) will be arranged in a dome (1) which will be arranged on a housing of the transformer or of the choke coil and has the bushing (7) and into which the line guide (4) will be inserted.

14. Use according to Claim 12 or 13,
**characterized in that** at least one barrier element (22 to 27) surrounds at least a portion of the bushing (7).

## Revendications

1. Dispositif (9) de blindage d'un élément de liaison conducteur de l'électricité, comprenant une électrode ( 10 ) tubulaire, qui est ouverte aux deux extrémités, dans laquelle l'élément de liaison peut passer et dont le côté extérieur est isolé électriquement et plusieurs éléments ( 22 à 25 ) tubulaires formant barrière, qui sont emboîtés les uns dans les autres et qui sont disposés concentriquement autour de l'électrode ( 10 ), dans lequel, autour de chaque tronçon ( 13, 14 ) d'extrémité de l'électrode ( 10 ), sont disposés concentriquement au moins deux éléments ( 16, 17, 19, 20 ) annulaires de même type, emboîtés les uns dans les autres, qui dépassent du tronçon ( 13, 14 ) d'extrémité respectif de l'électrode ( 10 ) et dont les parties dépassant du tronçon ( 13, 14 ) d'extrémité sont courbées vers l'intérieur de 90°, **caractérisé en ce que** tous les éléments ( 16, 17, 19, 20 ) annulaires de chaque tronçon ( 13, 14 ) d'extrémité de l'électrode ( 10 ) sont fixés à respectivement un anneau ( 18, 21 ) de maintien annulaire et disposé concentriquement à ces éléments ( 16, 17, 19, 20 ) annulaires.

2. Dispositif ( 9 ) de blindage suivant la revendication 1, **caractérisé en ce qu'**au moins une partie ( 11, 12 ) de bord d'un tronçon ( 13, 14 ) d'extrémité de l'électrode ( 10 ) est recourbée vers l'intérieur.

3. Dispositif ( 9 ) de blindage suivant la revendication 2, **caractérisé en ce que** chaque partie ( 11, 12 ) de bord recourbée vers l'intérieur de l'électrode ( 10 ) est isolée électriquement.

4. Dispositif ( 9 ) de blindage suivant l'une des revendications précédentes,
**caractérisé en ce que** les électrodes ( 10 ) sont en cuivre ou en aluminium.

5. Dispositif ( 9 ) de blindage suivant l'une des revendications précédentes,
**caractérisé en ce que** les parties isolées électriquement de l'électrode ( 10 ) sont isolées électriquement au moyen d'un isolant ( 15 ) en papier ou d'un matériau couché en feuille.

6. Dispositif ( 9 ) de blindage suivant l'une des revendications précédentes,
**caractérisé en ce qu'**au moins l'un des éléments ( 22 à 25 ) tubulaires formant barrière et disposés autour de l'électrode ( 10 ) est composé de deux sous-pièces ( 23.1, 23.2, 24.1, 24.2, 25.1, 25.2 ) tubulaires, qui sont aboutées dans une partie ( 23.3, 24.3, 25.3 ) annulaire de chevauchement.

7. Dispositif ( 9 ) de blindage suivant l'une des revendications précédentes,
**caractérisé en ce que** les étendues longitudinales des éléments ( 22 à 25 ) tubulaires formant barrière et disposés concentriquement autour de l'électrode ( 10 ) augmentent de l'intérieur vers l'extérieur, chacun de ces éléments ( 22 à 25 ) formant barrière, entourant concentriquement complètement tous les éléments ( 22 à 25 ) tubulaires formant barrière se trouvant davantage vers l'intérieur.

8. Dispositif ( 9 ) de blindage suivant l'une des revendications précédentes,
**caractérisé par** au moins un premier élément ( 26 ) formant barrière, creux et en forme de tronc de cône, qui est disposé à la manière d'un toit sur un tronçon ( 13, 14 ) d'extrémité d'électrode ( 10 ) et qui se rétrécit en s'éloignant de l'électrode ( 10 ).

9. Dispositif ( 9 ) de blindage suivant l'une des revendications précédentes,
**caractérisé par** un deuxième élément ( 27 ) creux formant barrière, en forme de tronc de cône, qui est disposé à la manière d'une trémie sur un tronçon ( 13, 14 ) d'extrémité de l'électrode ( 10 ) et qui s'élargit en s'éloignant de l'électrode ( 10 ).

10. Dispositif ( 9 ) de blindage suivant l'une des revendications précédentes,
**caractérisé en ce qu'**au moins un élément ( 22 à 27 ) formant barrière et/ou l'électrode ( 10 ) est fixé à au moins un anneau ( 18, 21 ) de maintien.

11. Dispositif ( 9 ) de blindage suivant l'une des revendications précédentes,
**caractérisé en ce que** les éléments ( 22 à 27 ) formant barrière et/ou les éléments ( 16, 17, 19, 20 ) annulaires et/ou les anneaux ( 18, 21 ) de maintien sont en carton comprimé et lustré.

12. Utilisation d'un dispositif ( 9 ) de blindage suivant l'une des revendications précédentes, pour un transformateur ou pour une bobine de self, pour le blindage d'un élément de liaison conducteur de l'électricité, qui s'étend entre une traversée ( 7 ) pour la mise en contact du transformateur ou de la bobine de self et un guidage ( 4 ) de ligne du transformateur ou de la bobine de self.

13. Utilisation suivant la revendication 12, **caractérisée en ce que** le dispositif ( 9 ) de blindage est mis dans un dôme ( 1 ), qui est disposé sur l'enveloppe du transformateur ou de la bobine de self et qui a la traversée ( 7 ) et dans lequel passe le guidage ( 4 ) de ligne.

14. Utilisation suivant la revendication 12 ou 13, **caractérisée en ce qu'**au moins un élément ( 22 à 27 ) formant barrière entoure au moins une partie de la traversée ( 7 ).
